# EUROPÄISCHE PATENTSCHRIFT

(11) **EP 1 092 656 B1**
(45) Veröffentlichungstag und Bekanntmachung des Hinweises auf die Patenterteilung: **27.10.2004**
(21) Anmeldenummer: 00117573.6
(22) Anmeldetag: 16.08.2000
(51) Int. Cl.: B65G 17/06

(54) **Transporteinrichtung**
Transport device
Dispositif de transport

(30) Priorität: 15.10.1999 DE 19949690
(43) Veröffentlichungstag der Anmeldung: 18.04.2001
(73) Patentinhaber: BRECO Antriebstechnik Breher GmbH & Co., 32457 Porta Westfalica (DE)
(72) Erfinder: Sundermeier, Friedrich, 32459 Bad Oeynhausen (DE); Heinz, Martin, 32457 Porta Westfalica (DE)
(74) Vertreter: Hosbach, Hans Ulrich, Dipl.-Ing.

(56) Entgegenhaltungen:
- DE-C- 3 709 046
- US-A- 4 723 652
- US-A- 5 042 648

## Beschreibung

Die Erfindung betrifft eine Transporteinrichtung zum Horizontalfördern von Gegenständen, mit einer Mehrzahl von Plattenelementen, die in einer gemeinsamen Horizontalebene kettenartig entlang eines endlosen Weges antreibbar und in dieser Horizontalebene gegeneinander verschwenkbar sind, siehe z.B. das Dokument US-A-5 042 648.

Derartige Transporteinrichtungen werden überwiegend dazu eingesetzt, Bearbeitungsmaschinen mit Werkstücken zu versorgen oder Werkstücke von einer Bearbeitungsstation zur anderen zu transportieren. Dabei spielt eine exakte Positionierung der Plattenelemente an den Be- und Entladestationen eine wesentliche Rolle, insbesondere wenn die Transporteinrichtungen taktweise arbeiten.

Aus der Praxis sind Transporteinrichtungen der eingangs genannten Art bekannt, bei denen die einzelnen Plattenelemente zur Bildung einer Kette gelenkig miteinander verbunden sind. Zum Bewegen der Kette dient ein Reibradantrieb. Die Ketten bestehen aus vielen Einzelteilen und sind daher kostenaufwendig und verschleißanfällig.

Es wurde gefunden, daß die Positioniergenauigkeit der bekannten Einrichtungen zu wünschen übrig läßt. Dies ist zum einen darauf zurückzuführen, daß ein Reibradantrieb aufgrund des unvermeidbaren Schlupfes nur in Grenzen exakt gesteuert werden kann. Hinzukommt, daß die von den Plattenelementen gebildete Kette sich unter Belastung längt, wobei es durch den unvermeidbaren Verschleiß in den Kettengelenken im Laufe der Zeit auch zu einer bleibenden Längung kommt.

Der Erfindung liegt daher die Aufgabe zugrunde, die Positioniergenauigkeit der Transporteinrichtungen zu erhöhen.

Zur Lösung dieser Aufgabe ist die Transporteinrichtung der eingangs genannten Art erfindungsgemäß dadurch gekennzeichnet, daß die Plattenelemente von einem gemeinsamen Zahnriemen antreibbar sind, der vertikal ausgerichtet und von mindestens einer vertikalachsigen Zahnscheibe entlang des endlosen Weges der Plattenelemente antreibbar ist.

Ein Zahnriemen unterliegt keiner dauerhaften Längung, und zwar auch nicht nach langer Benutzungszeit. Dies gilt vor allen Dingen für Zahnriemen aus Kunststoff, wie sie bevorzugt Anwendung finden. Eingearbeitete längslaufende Drahtlitzen sorgen für die erforderliche Stabilität. Hinzu kommt, daß Zahnriemen schlupffrei angetrieben werden. Im Ergebnis ermöglichen sie eine extrem exakte Steuerung mit entsprechend hoher Positioniergenauigkeit.

Der endlose Weg der Plattenelemente kann beliebig geführt werden. An den Umlenkstellen arbeitet man auf der Profilseite des Zahnriemens mit Zahnscheibe und auf der Rückseite mit glatten Rollen. Von den Zahnscheiben können mehrere antreibbar sein, und zwar in Abhängigkeit von der Weglänge und der Belastung der Transporteinrichtung. Letztere eignet sich auch für den Aufbau von Magazinstrecken und Stauförderern.

Die Plattenelemente können nach wie vor sämtlichst oder gruppenweise gelenkig miteinander verbunden sein. Eine Kraftübertragung zwischen benachbarten Plattenelementen läßt sich dabei beliebig reduzieren, vorzugsweise sogar völlig eliminieren, sofern jedes Plattenelement von dem gemeinsamen Zahnriemen gesondert angetrieben wird, d.h., gesondert an den Zahnriemen angekuppelt ist.

Auch unter diesen Umständen muß auf gelenkige Verbindungen zwischen den einzelnen Plattenelementen oder Gruppen von Plattenelementen nicht verzichtet werden.

Besonders vorteilhaft ist es allderdings, sämtliche Plattenelemente zu separieren und jedes Plattenelement mit einer Steckkupplung zum Aufstecken auf den Zahnriemen zu versehen. Die Transporteinrichtung wird auf diese Weise extrem wartungsfreundlich, da im Falle von Beschädigungen nur die tatsächlich betroffenen Plattenelemente einzeln ausgetauscht werden können. Sie werden lediglich von dem Zahnriemen abgezogen, woraufhin neue Plattenelemente problemlos aufgesteckt, vorzugsweise aufgeklippt werden. Im übrigen entfällt jeglicher Gelenkverschleiß. Bei einem Kettenverbund bedarf es der Demontage der gesamten Kette.

Besonders bewährt haben sich Kupplungen, die zum Umgreifen eines zugehörigen Zahns des Zahnriemens taschenartig ausgebildet sind. Ein zwischen benachbarte Zähne greifender Vorsprung ist zwar gleichermaßen denkbar, doch greift ein solcher Vorsprung in den Verformungsbereich des Zahnriemens ein. Ein umgriffener Zahn hingegen unterliegt keiner Verformung.

Aus fertigungstechnischen Gründen ist es vorteilhaft, die Steckkupplungen einteilig an die Plattenelemente anzuformen. Die Plattenelemente bestehen vorzugsweise aus Kunststoff. Die Materialwahl kann frei getroffen und an die jeweiligen Anforderungen angepaßt werden. So sind also auch hochtemperaturfeste Kunststoffe einsetzbar. Die große Palette der zur Verfügung stehenden Materialien ergibt sich daraus, daß keine hochbelasteten Gelenkverbindungen zwischen benachbarten Plattenelementen erforderlich sind. Diese setzen bestimmte Gleiteigenschaften der Materialien voraus, die im Falle der Erfindung keine oder höchstens eine untergeordnete Rolle spielen.

Je nach Anwendungsfall können die Plattenelemente auf ihren Tragflächen mit Halterungen, vorzugsweise mit angeformten Halterungen für die Gegenstände versehen sein. Die Halterungen können auch mehrere Plattenelemente übergreifen. Es handelt sich um Adapter, die der Form der jeweiligen Werkstücke angepaßt sind.

Benachbarte Plattenelemente können mit kreissegmentartigen Gegenflächen aneinander anliegen, um die erforderliche beidseitige Schwenkbarkeit in der gemeinsamen Horizontalebene zu gewährleisten. Als vorteilhafter allerdings hat es sich herausgestellt, benachbarte Plattenelemente zahnsegmentartig ineinandergreifen zu lassen, wobei die Zahngeometrie an den jeweiligen Bewegungsablauf angepaßt sein kann. Auf diese Weise kann die Quererstreckung der Plattenelemente erhöht werden, auch wenn letztere in Zahnriemenlängsrichtung eng beabstandet sind.

Die erfindungsgemäße Transporteinrichtung eignet sich zum Fördern auch solcher Werkstücke, die eine beträchtliche Größe und ein beträchtliches Gewicht aufweisen. Mit zunehmendem Gewicht empfiehlt es sich allerdings, die Plattenelemente zumindest im lasttragenden Abschnitt ihres endlosen Wegen vertikal abzustützen. Im einfachsten Fall kann man Schienen vorsehen, die beidseitig des Zahnriemens zwischen dessen Umlenkstellen verlaufen. Die Materialwahl der Schienen kann so getroffen werden, daß die erforderlichen Gleiteigenschaften bereitgestellt werden, auch wenn die Plattenelemente aus einem wenig gleitfähigen Material bestehen.

Gegebenenfalls wird es sich empfehlen, auch den Zahnriemen zumindest im lasttragenden Abschnitt des endlosen Weges der Plattenelemente vertikal abzustützen. Dies gilt insbesondere für die Bereiche der Umlenkstellen, weil hier die vertikale Abstützung der Plattenelemente in der Regel nur außenseitig ohne Schwierigkeiten möglich ist.

Im einfachsten Fall kann man den Zahnriemen mit seiner Unterkante über eine Abstützschiene laufen lassen. Vor allen Dingen aber bietet sich die Möglichkeit, den Zahnriemen und die Zahnscheiben mit vertikalkraftübertragenden Profilierungen zu versehen. Beispielsweise können die Zähne bogenförmig gekrümmt sein. Dies verleiht dem Zahnriemen eine hervorragende Vertikalführung und unterdrückt außerdem den Polygoneffekt, was zu einem sehr ruhigen Lauf des Zahnriemens führt. Keilförmige Verzahnungen sind gleichermaßen denkbar, ferner auch gerade Zähne mit einer zentralen Keilführung. Die letztgenannte Gestaltung ist herstellungstechnisch besonders einfach und bietet auch beste Möglichkeiten für das Aufstecken oder Aufklippen der Plattenelemente. Im übrigen könne die Zahnscheiben auch mit einem Stützbord versehen sein, auf dem sich der Zahnriemen mit seiner vollen Seitenfläche abstützt.

Das letztgenannte Merkmal kommt vorzugsweise auch für glatte Umlenkrollen in Frage.

Die Erfindung wird im folgenden anhand bevorzugter Ausführungsbeispiele im Zusammenhang mit der beiliegenden Zeichnung näher erläutert. Die Zeichnung zeigt in:
Figur 1 einen Grundriß eines Abschnitts einer erfindungsgemäßen Transporteinrichtung;
Figur 2 eine Unteransicht eines Plattenelements gemäß Figur 1;
Figur 3 einen Schnitt durch die Transporteinrichtung an einer ersten Stelle;
Figur 4 einen Schnitt entsprechend Figur 3 an einer zweiten Stelle;
Figur 5 eine Abwicklung einer Verzahnung nach einer ersten Ausführungsform;
Figur 6 eine Abwicklung einer Verzahnung nach einer zweiten Ausführungsform;
Figur 7 eine Abwicklung einer Verzahnung nach einer dritten Ausführungsform.

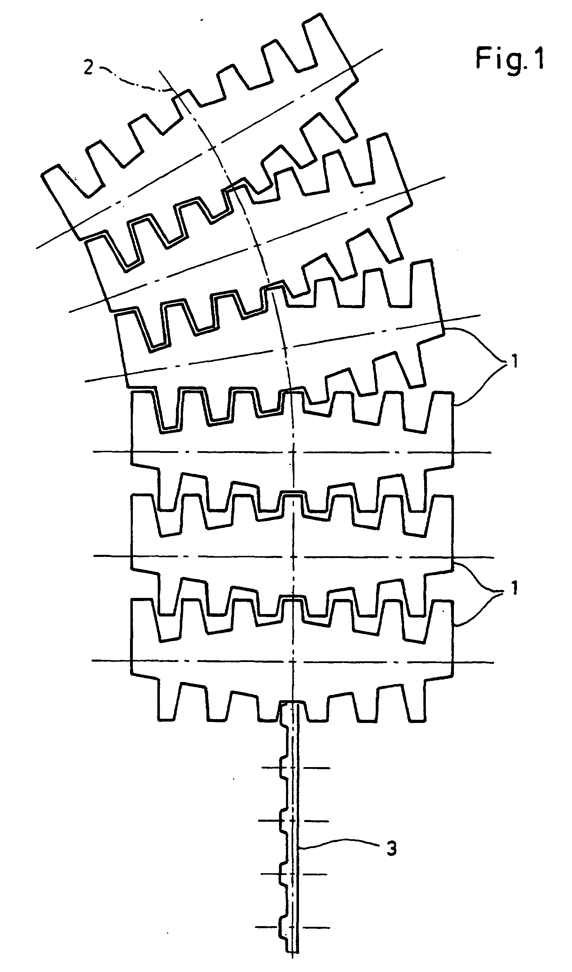

Die Transporteinrichtung nach Figur 1 dient zum Horizontalfördern nicht dargestellter Gegenstände. Sie weist eine Mehrzahl von Plattenelementen 1 auf, die in einer gemeinsamen Horizontalebene, nämlich in der Zeichenebene, entlang eines endlosen Weges 2 geführt werden. Ihr Antrieb erfolgt über einen Zahnriemen 3, auf den sie aufgesteckt sind.

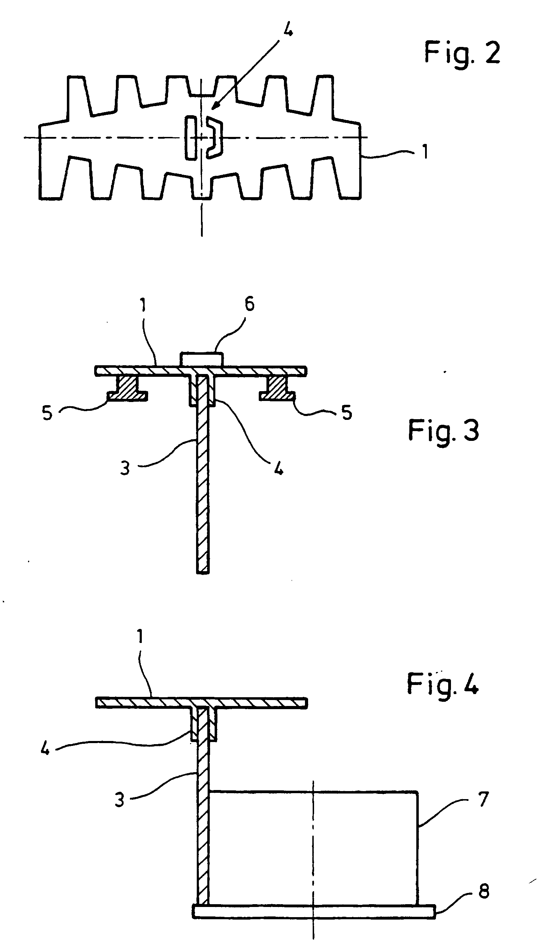

Die Art der Befestigung ergibt sich aus Figur 2. Jedes Plattenelement 1 ist mit einer angeformten Steckkupplung 4 versehen, wobei letztere taschenartig ausgebildet ist, um einen zugehörigen Zahn des Zahnriemens 3 zu umgreifen.

Jedes Plattenelement 1 wird gesondert vom Zahnriemen 3 angetrieben. Auch besteht keine Verbindung zwischen benachbarten Plattenelementen.

Die Transporteinrichtung ermöglicht eine sehr exakte Positionierung der Plattenelemente 1 und bietet ferner die Möglichkeit, die einzelnen Plattenelemente gesondert auszutauschen. Die Konstruktion ist einfach und wirtschaftlich herzustellen. Das Material der vorzugsweise spritzgegossenen Plattenelemente 1 kann ohne Berücksichtigung etwaiger Gleiteigenschaften ausgewählt werden, da zwischen den einzelnen Plattenelementen keine kraftübertragenden Gelenke vorhanden sind.

Wie insbesondere aus Figur 1 ersichtlich, greifen benachbarte Plattenelemente 1 zahnsegmentartig ineinander und ermöglichen dadurch die an den Umlenkstellen erforderliche Verschwenkbarkeit, und zwar nach beiden Richtungen.

Nach Figur 3 wird der Zahnriemen 3 von zwei Schienen 5 flankiert, auf denen sich die Plattenelemente 1 vertikal abstützen, um den Zahnriemen 3 von schwereren Gewichten zu entlasten. Ferner ist in Figur 3 eine Halterung 6 angedeutet, deren Form an die Form der zu transportierenden Werkstücke angepaßt ist.

Figur 4 zeigt eine Möglichkeit zum Abstützen des Zahnriemens 3 selbst, und zwar am Orte einer Umlenkstelle. Der Zahniemen 3 wird hier von einer glatten Rolle 7 geführt, die an der Rückseite des Zahnriemens anliegt. Dessen Zähne weisen also nach links in Figur 4. Die glatte Rolle 7 ist mit einem Stützbord 8 versehen, auf dem sich der untere Rand des Zahnriemens 3 stützt.

Ein entsprechendes Stützbord kann auch an denjenigen Umlenkstellen vorgesehen sein, an denen der Zahnriemen um eine angetriebene oder um eine freilaufende Zahnscheibe herumgeführt wird. Zusätzlich dazu oder als Alternative besteht die Möglichkeit, die Profilierung des Zahnriemens und der Zahnscheiben vertikalkraftübertragend auszubilden.

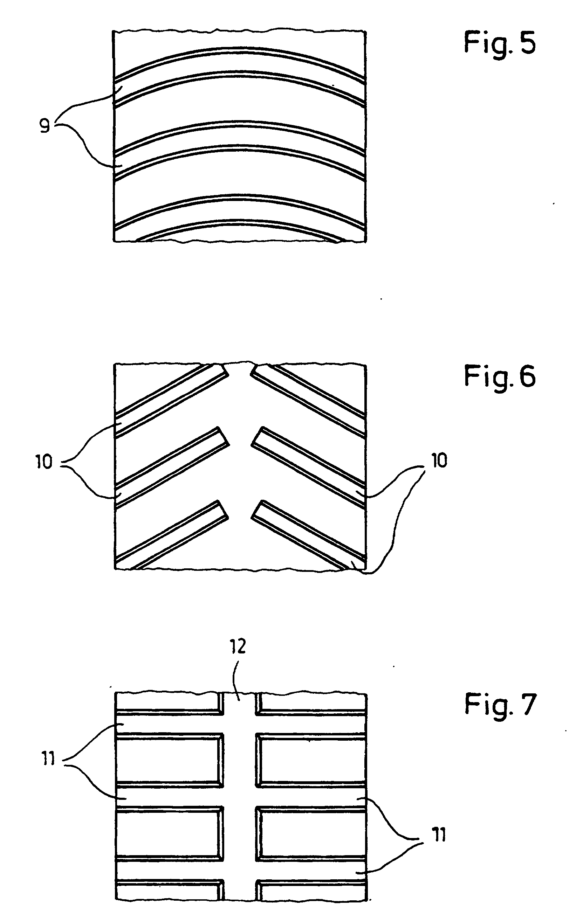

Figur 5 zeigt eine Abwicklung eines ersten Ausführungsbeispiels hierfür. Die Profilierung weist Zähne 9 auf, die bogenförmig ausgebildet sind und eine sehr gute Seitenführung, hier Vertikalführung des Zahnriemens auf der Zahnscheibe gewährleistet. Im übrigen wird der Polygoneffekt eliminiert.

Figur 6 zeigt eine Abwicklung einer Profilierung mit Zähnen 10, die pfeilförmig ausgerichtet sind und ebenfalls eine Vertikalführung des Zahnriemens auf der Zahnscheibe gewährleisten.

Letzteres gilt auch für die in Figur 7 als Abwicklung dargestellte Profilierung. Hier handelt es sich um Zähne 11, die geradlinig quer zur Laufrichtung ausgerichtet sind, wobei ein zentraler Keil 12 vorgesehen ist, der in eine entsprechende Nut des Gegenprofils eingreift.

Im Rahmen der Erfindung sind durchaus Abwandlungsmöglichkeiten gegeben. So können benachbarte Plattenelemente einzeln oder gruppenweise über entsprechende Gelenke in Laufrichtung miteinander verbunden sein. Die Kraftübertragung ist dennoch minimal, solange die Anzahl derjenigen Plattenelemente, die nicht direkt mit dem Zahnriemen verbunden sind, gering bleibt. Der Schwenkeingriff benachbarter Plattenelemente muß nicht zahnsegmentartig sein, sondern kann auch kreisbogensegmentartig ausgeführt werden. Bei der Darstellung nach Figur 1 ist jeder zweite Zahn des Zahnriemens mit einem Plattensegment besetzt. Die Teilung kann bei Bedarf vergrößert werden, und zwar auch derart, daß kein gegenseitiger Eingriff benachbarter Plattensegmente stattfindet. Anstelle der Steckkupplungen sind auch andere kraftübertragende Anschlüsse an den Zahnriemen möglich. Sofern erforderlich, können die Plattenelemente seitlich geführt werden.

## Patentansprüche

1. Transporteinrichtung zum Horizontalfördern von Gegenständen, mit einer Mehrzahl von Plattenelementen (1), die in einer gemeinsamen Horizontalebene kettenartig entlang eines endlosen Wegen (2) antreibbar und in dieser Horizontalebene gegeneinander verschwenkbar sind,
**dadurch gekennzeichnet,**
**daß** die Plattenelemente (1) von einem gemeinsamen Zahnriemen (3) antreibbar sind, der vertikal ausgerichtet und von mindestens einer vertikalachsigen Zahnscheibe entlang des endlosen Weges (2) der Plattenelemente (1) antreibbar ist.

2. Transporteinrichtung nach Anspruch 1, **dadurch gekennzeichnet, daß** jedes Plattenelement (1) gesondert von dem Zahnriemen (3) antreibbar ist.

3. Transporteinrichtung nach Anspruch 2, **dadurch gekennzeichnet, daß** jedes Plattenelement (1) eine Steckkupplung (4) zum Aufstecken auf den Zahnriemen aufweist.

4. Transporteinrichtung nach Anspruch 3, **dadurch gekennzeichnet, daß** die Steckkupplungen (4) zum Umgreifen eines zugehörigen Zahns des Zahnriemens (3) taschenartig ausgebildet sind.

5. Transporteinrichtung nach Anspruch 3 oder 4, **dadurch gekennzeichnet, daß** die Steckkupplungen (4) einteilig an die Plattenelemente (1) angeformt sind.

6. Transporteinrichtung nach einem der Ansprüche 1 bis 5, **dadurch gekennzeichnet, daß** die Plattenelemente (1) auf ihren Tragflächen mit Halterungen (6) für die Gegenstände versehen sind.

7. Transporteinrichtung nach einem der Ansprüche 1 bis 6, **dadurch gekennzeichnet, daß** benachbarte Plattenelemente (1) zahnsegmentartig ineinandergreifen.

8. Transporteinrichtung nach einem der Ansprüche 1 bis 7, **dadurch gekennzeichnet, daß** die Plattenelemente (1) zumindest im lasttragenden Abschnitt ihres endlosen Weges (2) vertikal abgestützt sind.

9. Transporteinrichtung nach einem der Ansprüche 1 bis 8, **dadurch gekennzeichnet, daß** der Zahnriemen (3) zumindest im lasttragenden Abschnitt des endlosen Weges (2) der Plattenelemente (1) vertikal abgestützt ist, wobei vorzugsweise der Zahnriemen und die Zahnscheiben vertikalkraftübertragende Profilierungen aufweisen.

10. Transporteinrichtung nach Anspruch 9, **dadurch gekennzeichnet, daß** der Zahnriemen (3) über mindestens eine glatte Rolle (7) geführt ist, die ein Stützbord (8) für den Zahnriemen (3) aufweist.

## Claims

1. Transport device for horizontally conveying articles, with a plurality of plate elements (1) which can be driven like a chain along an endless path (2) in a common horizontal plane and are pivotable with respect to one another in this horizontal plane, **characterised in that** the plate elements (1) can be driven by a common toothed belt (3) which is vertically oriented and can be driven by at least one toothed disc with a vertical axis along the endless path (2) of the plate elements (1).

2. Transport device as claimed in Claim 1, **characterised in that** each plate element (1) can be separately driven by the toothed belt (3).

3. Transport device as claimed in Claim 2, **characterised in that** each plate element (1) has a push-on coupling (4) for fitting onto the toothed belt.

4. Transport device as claimed in Claim 3, **characterised in that** the push-on couplings (4) are of pocket-like construction for engagement around an appertaining tooth on the toothed belt (3).

5. Transport device as claimed in either Claim 3 or 4, **characterised in that** the push-on couplings (4) are integrally formed on the plate elements (1).

6. Transport device as claimed in any one of Claims 1 to 5, **characterised in that** the plate elements (1) are provided on their support surfaces with mountings (6) for the articles.

7. Transport device as claimed in any one of Claims 1 to 6, **characterised in that** adjacent plate elements (1) interengage like tooth segments.

8. Transport device as claimed in any one of Claims 1 to 7, **characterised in that** the plate elements (1) are vertically supported at least in the load-bearing sections of their endless path.

9. Transport device as claimed in any one of Claims 1 to 8, **characterised in that** the toothed belt (3) is vertically supported at least in the load-bearing sections of the endless path of the plate elements (1), wherein the toothed belt and the toothed pulleys have profiles transmitting vertical forces.

10. Transport device as claimed in Claim 9, **characterised in that** the toothed belt (3) is guided over at least one smooth roller (7) which has a supporting rim (8) for the toothed belt (3).

## Revendications

1. Dispositif de transport horizontal d'objets comportant une série d'éléments plaques (1) qui sont entraînés en chaîne le long d'un chemin sans fin (2) dans un plan horizontal commun et peuvent pivoter les uns par rapport aux autres dans ce plan horizontal, **caractérisé par le fait que** les éléments plaques (1) sont entraînés par une courroie dentée commune (3) qui est orientée verticalement et entraînée le long du chemin sans fin (2) des éléments plaques (1) par au moins une poulie dentée à axe vertical.

2. Dispositif de transport selon la revendication 1, **caractérisé par le fait que** chaque élément plaque (1) est entraîné séparément par la courroie dentée (3).

3. Dispositif de transport selon la revendication 2, **caractérisé par le fait que** chaque élément plaque (1) présente un élément d'emboîtement (4) dans laquelle s'emboîte la courroie dentée.

4. Dispositif de transport selon la revendication 3, **caractérisé par le fait que** les éléments d'emboîtement (4) sont du genre poche pour enserrer une dent correspondante de la courroie dentée (3).

5. Dispositif de transport selon l'une des revendications 3 et 4, **caractérisé par le fait que** les éléments d'emboîtement (4) font corps avec les éléments plaques (1).

6. Dispositif de transport selon l'une des revendications 1 à 5, **caractérisé par** lé fait que les éléments plaques (1) sont pourvus sur leur surface portante de supports (6) pour les objets.

7. Dispositif de transport selon l'une des revendications 1 à 6, **caractérisé par le fait que** les éléments plaques (1) voisins s'emboîtent à la manière de secteurs dentés.

8. Dispositif de transport selon l'une des revendications 1 à 7, **caractérisé par le fait que** les éléments plaques (1) sont supportés verticalement au moins dans la partie portante de leur chemin sans fin (2).

9. Dispositif de transport selon l'une des revendications 1 à 8, **caractérisé par le fait que** la courroie dentée (3) est supportée verticalement au moins dans la partie portante du chemin sans fin (2) des éléments plaques (1), et de préférence, la courroie dentée et les poulies dentées présentent des profilages qui transmettent les forces verticales.

10. Dispositif de transport selon la revendication 9, **caractérisé par le fait que** la courroie dentée (3) passe sur au moins un rouleau lisse (7) qui présente un bord d'appui (8) pour la courroie dentée (3).
